# EUROPEAN PATENT APPLICATION

(11) **EP 4 757 453 A1**
(43) Date of publication of application: **10.06.2026**
(21) Application number: 24853226.9
(22) Date of filing: 11.04.2024
(51) Int. Cl.: H04W 72/0446

(54) **TIME DOMAIN WINDOW DETERMINATION METHOD, COMMUNICATION NODE, AND STORAGE MEDIUM**

(30) Priority: 11.08.2023 CN 202311017946
(71) Applicant: ZTE Corporation, Shenzhen, Guangdong 518057 (CN)
(72) Inventor: CUI, Fangyu, Shenzhen, Guangdong 518057 (CN); ZHANG, Nan, Shenzhen, Guangdong 518057 (CN); YIN, Yachao, Shenzhen, Guangdong 518057 (CN); CAO, Wei, Shenzhen, Guangdong 518057 (CN); LI, Junli, Shenzhen, Guangdong 518057 (CN)
(74) Representative: Aipex B.V.
(86) International application number: PCT/CN2024/087217
(87) International publication number: WO 2025/035810

(57) **Abstract**

Provided are a time-domain window determination method, a communication node, and a storage medium. The method includes sending first information to a second communication node; and determining a time-domain window (TDW) for demodulation reference signal (DMRS) bundling.

## Description

### TECHNICAL FIELD

The present application relates to the field of communication technology, for example, a time-domain window determination method, a communication node, and a storage medium.

### BACKGROUND

At present, non-terrestrial networks (NTNs) are supported in the 3rd Generation Partnership Project (3GPP) specifications. To mitigate performance degradation caused by the excessive distance between a terminal device and a satellite, coverage enhancement for NTNs was discussed in 3GPP Release 18 (R18). Traditional demodulation reference signal (DMRS) bundling based on terrestrial networks (TNs) can be applied to NTNs and adaptively adjusted when necessary. However, since an inter-slot phase difference within the same time-domain window (TDW) for DMRS bundling is constrained within a specific threshold, applying a conventional DMRS bundling method to NTNs may involve factors that cause phase discontinuity (for example, timing advance (TA) pre-compensation update). Therefore, how to determine the TDW for DMRS bundling in NTNs has become an urgent issue to be addressed.

### SUMMARY

Embodiments of the present application provide a time-domain window determination method applied to a first communication node. The method includes sending first information to a second communication node; and determining a time-domain window (TDW) for demodulation reference signal (DMRS) bundling.

Embodiments of the present application provide a time-domain window determination method applied to a second communication node. The method includes receiving first information sent by a first communication node; determining the length of a time-domain window (TDW) for demodulation reference signal (DMRS) bundling; and sending the length of the TDW to the first communication node.

Embodiments of the present application provide a communication node. The communication node includes a processor configured to perform the method of any previous embodiment when executing a computer program.

Embodiments of the present application provide a computer-readable storage medium storing a computer program which, when executed by a processor, causes the processor to perform the method of any previous embodiment.

The preceding embodiments and other aspects of the present application and implementations thereof are described in more detail in the brief description of drawings, detailed description, and claims.

### BRIEF DESCRIPTION OF DRAWINGS

FIG. 1 is a network diagram of an NTN communication system according to an embodiment.
FIG. 2 is a flowchart of a time-domain window determination method according to an embodiment.
FIG. 3 is a flowchart of a time-domain window determination method according to an embodiment.
FIG. 4 is a flowchart of a time-domain window determination method according to an embodiment.
FIG. 5 is a flowchart of a time-domain window determination method according to an embodiment.
FIG. 6 is a diagram illustrating the structure of a time-domain window determination apparatus according to an embodiment.
FIG. 7 is a diagram illustrating the structure of a time-domain window determination apparatus according to an embodiment.
FIG. 8 is a diagram illustrating the structure of a base station according to an embodiment.
FIG. 9 is a diagram illustrating the structure of a UE according to an embodiment.

### DETAILED DESCRIPTION

It is to be understood that the embodiments described herein are intended to explain the present application, not to limit the present application. The embodiments of the present application are described hereinafter in detail in conjunction with the drawings.

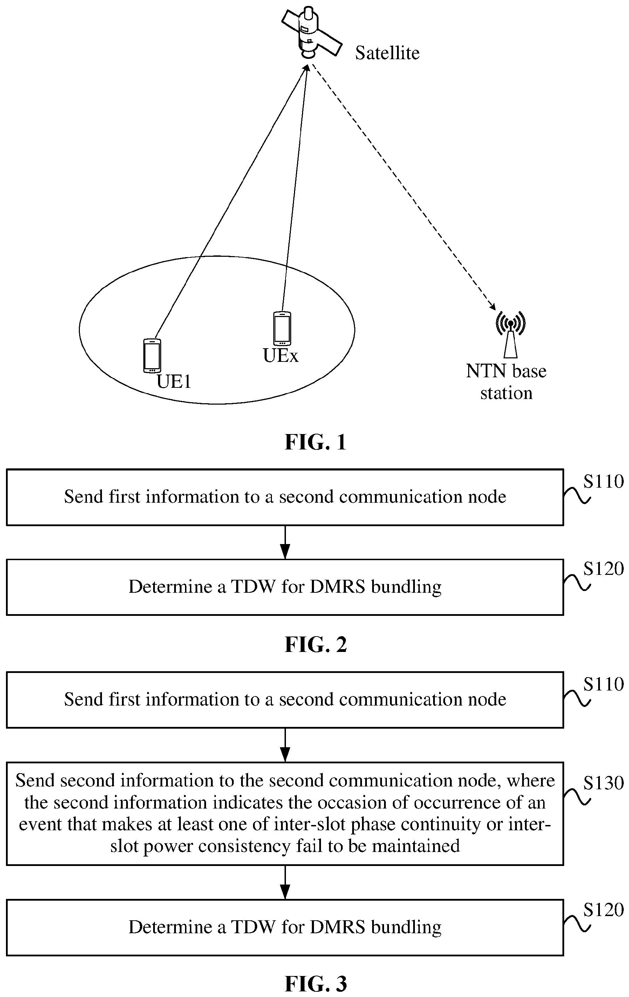

The time-domain window determination method of the present application may be applied to an NTN communication system. FIG. 1 is a network diagram of an NTN communication system according to an embodiment. As shown in FIG. 1, in the NTN communication system, a link between a terminal device (for example, a user equipment (UE)) and a satellite is a service link, a link between an access network device (for example, a base station) and a satellite is a feeder link, and the feeder link is common to all UEs (for example, UE1 and UEx shown in FIG. 1) in the same cell.

The terminal device may be a wireless transceiving device that may be deployed on land (for example, being indoor or outdoor, handheld, wearable, or vehicle-mounted), deployed on the water surface (for example, a ship), or deployed in the air (for example, an aircraft, a balloon, or a satellite). The terminal device may be, for example, a user equipment (UE), a mobile phone, a mobile station, a tablet computer, a notebook computer, an ultra-mobile personal computer (UMPC), a handheld computer, a netbook, a personal digital assistant (PDA), another user equipment connectable to a network, a virtual reality (VR) terminal, an augmented reality (AR) terminal, a wireless terminal in industrial control, a wireless terminal in self-driving, a wireless terminal in remote medical care, a wireless terminal in a smart grid, a wireless terminal in transportation safety, a wireless terminal in a smart city, a wireless terminal in a smart home, an IoT node in the Internet of Things, a vehicle-mounted communication apparatus in vehicle-to-everything, an entertainment or gaming device or system, or a global positioning system (GPS) device. The embodiments of the present application do not limit technologies and forms that are used by the terminal device. The terminal device may be referred to as a terminal.

The access network device is an access device through which the terminal device accesses the wireless communication system in a wireless manner. The access network device may include a base station, an evolved NodeB (eNB or eNodeB) in long-term evolution advanced (LTEA), a transmission reception point (TRP), a base station or next-generation NodeB (gNB) in a 5G mobile communication system, a base station in a future mobile communication system, and an access node in a Wireless Fidelity (Wi-Fi) system. The base station may be, for example, a macro base station, a micro base station, a home base station, a remote radio unit, a router, a Wi-Fi device, a primary-cell device, a secondary-cell device, another network-side device, or a location management function (LMF) device. It may also be a module or unit for implementing some functions of the base station, for example, a central unit (CU) or a distributed unit (DU). The embodiments of the present application do not limit technologies and forms that are used by the access network device. The access network device may be referred to as a base station.

In a conventional terrestrial network (TN) communication system, joint channel estimation (JCE) has been used for New Radio (NR) coverage enhancement. For JCE, reference signals (RSs) at different time instances may be jointly used to estimate a channel to obtain improved channel estimation performance and achieve better decoding performance. Since RSs used for joint estimation are required to be coherent, 3GPP specifies a time-domain window (TDW) determination method so that DMRS bundling is performed within the TDW to facilitate further channel estimation. For example, a UE reports capability information associated with the maximum duration. Within the maximum duration, the UE is capable of maintaining inter-slot phase continuity and inter-slot power consistency to support DMRS bundling. A base station may configure the length of the TDW so that the UE can determine the nominal TDW according to the length of the TDW and determine the actual TDW according to the event occurring within the nominal TDW and making at least one of inter-slot phase continuity or inter-slot power consistency fail to be maintained. The UE maintains or is expected to maintain phase continuity and power consistency within the actual TDW.

The current standard specifies the following events for determining the actual TDW:
Downlink slots, downlink reception, or downlink monitoring based on tdd-UL-DL-ConfigurationCommon and tdd-UL-DL-ConfigurationDedicated for unpaired spectrum;
An interval between any two consecutive physical uplink shared channel (PUSCH) transmissions or an interval between any two adjacent physical uplink control channel (PUCCH) transmissions, where the interval exceeds 13 symbols for a normal cyclic prefix or exceeds 11 symbols for an extended cyclic prefix;
An interval between any two consecutive PUSCH transmissions or an interval between any two adjacent PUCCH transmissions, where the interval does not exceed 13 symbols, but other uplink transmissions are scheduled between the two consecutive PUSCH transmissions or between the two consecutive PUCCH transmissions;
For repetition type-A PUSCH transmission, repetition type-B PUSCH transmission, or transport block (TB) processing over multiple slots, discarding or cancelling PUSCH transmission in accordance with Clause 9, Clause 11.1, and Clause 11.2A of TS 38.213;
For repeated PUCCH transmission, discarding or cancelling PUCCH transmission in accordance with Clause 9, Clause 9.2.6, and Clause 11.1 of TS 38.213;
For any two consecutive repetition type-A or repetition type-B PUSCH transmissions, when two sounding reference signal (SRS) resource sets are configured in srs-ResourceSetToAddModList or srs-ResourceSetToAddModListDCI-0-2, and a higher-layer parameter usage of the SRS resource set is configured as "codebook" or "non-codebook", different SRS resource sets are associated with the two repetition type-A or repetition type-B PUSCH transmissions in accordance with Clause 6.1.2.1;
For any two consecutive repeated PUCCH transmissions, when the repeated PUCCH resources used by the UE include a first spatial relation and a second spatial relation or include a first set of power control parameters and a second set of power control parameters, as described in TS 38.321 and Clause 7.2.1 of TS 38.113, different spatial relations or different power control parameters are applied to the two repeated PUCCH transmissions in accordance with Clause 9.2.6 of TS 38.213;
An uplink timing adjustment in response to a timing advance command, as specified in Clause 4.2 of TS 38.213;

### Frequency modulation;

For a reduced-capability half-duplex UE, discarding or cancelling PUSCH or PUCCH transmission in accordance with Clause 17.2 of TS 38.213; or for a reduced-capability half-duplex UE, the gap between two consecutive PUSCH transmissions or two consecutive PUCCH transmissions overlapping any symbol used for downlink reception or downlink monitoring.

In addition, TS 38.101-1 defines phase difference limits for DMRS bundling.

**Table 1 Maximum allowable phase difference for bundling**

| Uplink Channel | Modulation Order | Phase Difference Between Slot p-1 and Slot p (NOTE 2) | Phase Difference Between Slot 0 and Slot p (NOTE 3) |
|---|---|---|---|
| PUSCH | Pi/2 BPSK, QPSK | 25 degrees | 30 degrees |
| PUCCH | Pi/2 BPSK, BPSK, QPSK | | |
| NOTE 1: The UE capability for the maximum duration refers to the maximum duration in which the UE can satisfy phase continuity requirements, assuming that no phase-consistency-violating events defined in TS 38.214 occur in this duration. | | | |
| NOTE 2: This requirement applies to both frequency division duplex (FDD) and time division duplex (TDD) bands and supports DMRS bundling configuration of less than or equal to 8 slots. | | | |
| NOTE 3: This requirement applies to only FDD bands and supports DMRS bundling configuration of 16 slots. | | | |

In this embodiment of the present application, a time-domain window determination method, a communication node, and a storage medium that can operate in the preceding NTN communication system are provided to avoid various factors that may cause phase discontinuity in the NTN and to determine the TDW for DMRS bundling.

The following describes the time-domain window determination method, the communication node, and the technical effects thereof.

FIG. 2 is a flowchart of a time-domain window determination method according to an embodiment. As shown in FIG. 2, the method of this embodiment is applicable to a first communication node (also referred to as a first communication node device, or a first node, or a first device), for example, a UE. The method includes the following:
In S110, first information is sent to a second communication node.

In an embodiment, to enhance NR coverage performance in an NTN, a conventional TN-based DMRS bundling method can be adaptively applied to the NTN. 3GPP Release 17 (R17) specifies DMRS bundling capability information for indicating the maximum duration supported by a UE. In the maximum duration, the UE can maintain power consistency and phase continuity to support DMRS bundling for PUSCH/PUCCH. However, in the NTN, factors that cause phase discontinuity and/or power inconsistency may exist, thereby affecting DMRS bundling. Therefore, the present application defines additional information (that is, first information) for DMRS bundling and enables the first communication node to send the first information to the second communication node.

In an embodiment, the first information includes at least one of the following information 1 to 6:
Information 1: capability information associated with the maximum duration for DMRS bundling supported by the first communication node in a non-terrestrial network (NTN).

For information 1, the maximum duration for DMRS bundling supported by the first communication node in the NTN may be determined according to all potential factors that may affect DMRS bundling in the NTN. The factors include at least one of the following: phase pre-compensation capability information; the occasion of TA pre-compensation update; the period of TA pre-compensation update; the occasion of antenna switching; or the period of antenna switching.

Information 2: first indication information for indicating whether timing advance (TA) pre-compensation update is allowed within the actual TDW.

In an embodiment, information 2 may generally be used in combination with information 4, information 5, or information 6.

Information 3: second indication information for indicating whether the first communication node is capable of maintaining at least one of inter-slot phase continuity or inter-slot power consistency during TA pre-compensation update.

In an embodiment, information 3 may also generally be used in combination with information 4, information 5, or information 6.

Information 4: capability information associated with the maximum duration for DMRS bundling supported by the first communication node in a terrestrial network (TN).

Information 5: capability information associated with the maximum duration for DMRS bundling supported by the first communication node when at least one of TA pre-compensation update or antenna switching is not considered.

Information 6: capability information associated with the maximum duration for DMRS bundling supported by the first communication node when an event that is determined by the first communication node and that makes at least one of the inter-slot phase continuity or the inter-slot power consistency fail to be maintained is not considered.

In S120, a time-domain window (TDW) for demodulation reference signal (DMRS) bundling is determined.

In an embodiment, the TDW for the DMRS bundling includes at least one of a nominal TDW or an actual TDW.

When the TDW includes the nominal TDW, determining the nominal TDW for the DMRS bundling includes one of the following:
Method 1: determining the nominal TDW according to at least one of the first information or the duration of uplink repetition transmission; or
Method 2: receiving the length of the TDW sent by the second communication node and determining the nominal TDW according to the length of the TDW.

The difference between the two methods lies in that method 1 allows the first communication node to determine the nominal TDW, that is, the first communication node may additionally take into account the additional information for the DMRS bundling and/or the duration of uplink repetition transmission when determining the nominal TDW; whereas method 2 allows the second communication node to determine the length of the TDW and send the length of the TDW to the first communication node so that the first communication node can determine the nominal TDW according to the length of the TDW.

Based on the previous embodiments, FIG. 3 is a flowchart of a time-domain window determination method according to an embodiment. As shown in FIG. 3, before step S120 is performed, step S130 is also included.

In S130, second information is sent to the second communication node, where the second information indicates the occasion of occurrence of an event that makes at least one of inter-slot phase continuity or inter-slot power consistency fail to be maintained.

Since the event that makes at least one of the inter-slot phase continuity or the inter-slot power consistency fail to be maintained may be determined by the UE, when at least one of the inter-slot phase continuity or the inter-slot power consistency cannot be maintained, the first communication node is required to report the occasion of occurrence of the corresponding event to the second communication node so that the first communication node and the second communication node can reach a consensus on the determination of the TDW for the DMRS bundling.

In an embodiment, the event that makes at least one of the inter-slot phase continuity or the inter-slot power consistency fail to be maintained includes at least one of the following:
TA pre-compensation update;
antenna switching;
inter-slot phase discontinuity or an inter-slot phase difference greater than or equal to a first threshold; or
inter-slot power inconsistency or a power difference greater than or equal to a second threshold.

Specifically, values of the first threshold and the second threshold may be set according to actual requirements. This is not limited by the present application.

In an embodiment, the second information is implemented in at least one of the following forms: at least one timestamp; at least one of a period or a start time; or at least one of a time interval or a time length.

The timestamp indicates a time at which the event occurs. Specifically, the timestamp may be reported according to the start or the end of a DL/UL slot, a subframe, or a frame and may be indicated by at least one of a hyper system frame number (H-SFN), a system frame number (SFN), a subframe number, or a slot number. Alternatively, the timestamp may be reported using an absolute time.

Periodic timing indicates when the event occurs at the first communication node. Specifically, the start time may be indicated by a start offset or a timestamp; and the start offset may be counted from the start of repetition transmission or from the end of reporting signaling.

The event does not occur within the specified time interval or the specified time length. If only one time interval or time length is reported, periodic occurrence of the event may be considered; and if more than one time interval or time length is indicated, the event may occur sequentially according to the reported time interval.

Based on the second information, the first communication node and the second communication node may reach a consensus on when the event that makes at least one of the inter-slot phase continuity or the inter-slot power consistency fail to be maintained and disrupts the DMRS bundling occurs. Subsequently, the actual TDW may be determined according to the timing sequence of the reported information.

In an embodiment, if the first communication node sends the second information to the second communication node, then the length of the TDW in step S120 may be determined by the second communication node according to at least one of the first information or the second information. Alternatively, the actual TDW may be determined by the first communication node according to the second information and the nominal TDW.

Since DMRS bundling is applied to repetition transmission of the same PUSCH/PUCCH, it is unlikely that another TB or resource is inserted for timing reporting during the DMRS bundling. Therefore, the first communication node may check whether and when the event occurs before PUSCH/PUCCH transmission, and the second information requires to be performed in advance.

Specifically, in step S130, the method of "sending the second information to the second communication node" may include: before the DMRS bundling, sending the second information to the second communication node through any one of a transport block (TB), a physical uplink control channel (PUCCH), a physical uplink shared channel (PUSCH), or a medium access control (MAC) control element (MAC CE); and/or sending the second information to the second communication node through radio resource control (RRC) signaling. The second information is applied to PUSCH/PUCCH transmission.

In an embodiment, the occasion of TA pre-compensation update may also be configured by the second communication node for the first communication node.

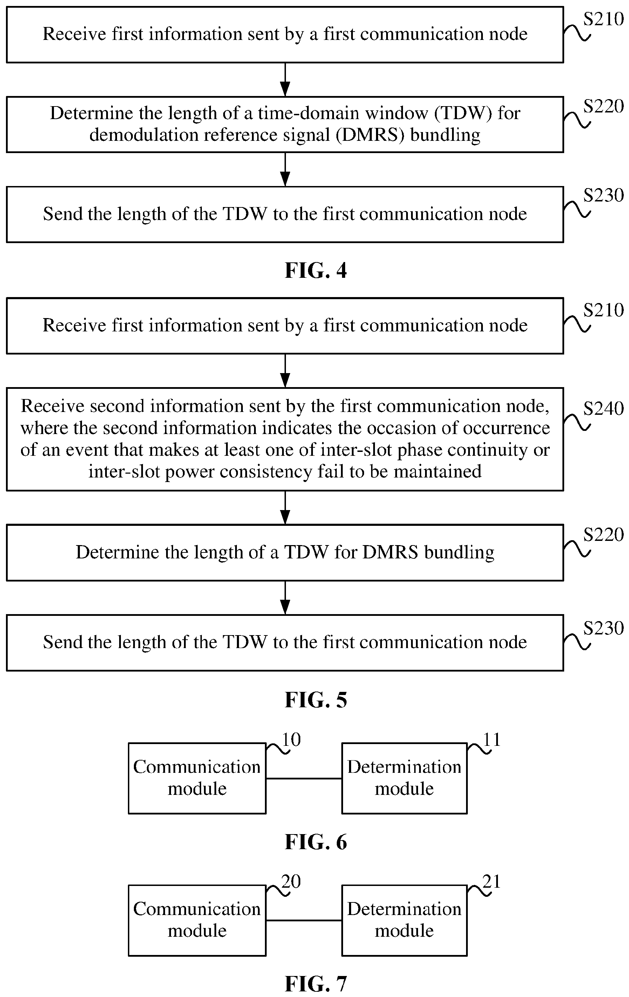

FIG. 4 is a flowchart of a time-domain window determination method according to an embodiment. As shown in FIG. 4, the method of this embodiment is applicable to a second communication node (which may also be referred to as a second communication node device, or a second node, or a second device), for example, a base station. The method includes the following:
In S210, first information sent by a first communication node is received.

In an embodiment, to enhance NR coverage performance in an NTN, a conventional TN-based DMRS bundling method can be adaptively applied to the NTN. 3GPP Release 17 (R17) specifies DMRS bundling capability information for indicating the maximum duration supported by a UE. In the maximum duration, the UE can maintain power consistency and phase continuity to support DMRS bundling for PUSCH/PUCCH. However, in the NTN, factors that cause phase discontinuity and/or power inconsistency may exist, thereby affecting DMRS bundling. Therefore, the present application defines additional information (that is, first information) for DMRS bundling and enables the second communication node to receive the first information sent by the first communication node.

In an embodiment, the first information includes at least one of the following information 1 to 6:
Information 1: capability information associated with the maximum duration for DMRS bundling supported by the first communication node in a non-terrestrial network (NTN).

For information 1, the maximum duration for DMRS bundling supported by the first communication node in the NTN may be determined according to all potential factors that may affect DMRS bundling in the NTN. The factors include at least one of the following: phase pre-compensation capability information; the occasion of TA pre-compensation update; the period of TA pre-compensation update; the occasion of antenna switching; or the period of antenna switching.

Information 2: first indication information for indicating whether timing advance (TA) pre-compensation update is allowed within the actual TDW.

In an embodiment, information 2 may generally be used in combination with information 4, information 5, or information 6.

Information 3: second indication information for indicating whether the first communication node is capable of maintaining at least one of inter-slot phase continuity or inter-slot power consistency during TA pre-compensation update.

In an embodiment, information 3 may also generally be used in combination with information 4, information 5, or information 6.

Information 4: capability information associated with the maximum duration for DMRS bundling supported by the first communication node in a terrestrial network (TN).

Information 5: capability information associated with the maximum duration for DMRS bundling supported by the first communication node when at least one of TA pre-compensation update or antenna switching is not considered.

Information 6: capability information associated with the maximum duration for DMRS bundling supported by the first communication node when an event that is determined by the first communication node and that makes at least one of the inter-slot phase continuity or the inter-slot power consistency fail to be maintained is not considered.

In S220, the length of a time-domain window (TDW) for demodulation reference signal (DMRS) bundling is determined.

In S230, the length of the TDW is sent to the first communication node.

Based on the previous embodiments, FIG. 5 is a flowchart of a time-domain window determination method according to an embodiment. As shown in FIG. 5, before step S220 is performed, step S240 is also included.

In S240, second information sent by the first communication node is received, where the second information indicates the occasion of occurrence of an event that makes at least one of inter-slot phase continuity or inter-slot power consistency fail to be maintained.

Since the event that makes at least one of the inter-slot phase continuity or the inter-slot power consistency fail to be maintained may be determined by the UE, when at least one of the inter-slot phase continuity or the inter-slot power consistency cannot be maintained, the first communication node is required to report the occasion of occurrence of the corresponding event to the second communication node so that the first communication node and the second communication node can reach a consensus on the determination of the TDW for the DMRS bundling.

In an embodiment, the event that makes at least one of the inter-slot phase continuity or the inter-slot power consistency fail to be maintained includes at least one of the following:
TA pre-compensation update;
antenna switching;
inter-slot phase discontinuity or an inter-slot phase difference greater than or equal to a first threshold; or
inter-slot power inconsistency or a power difference greater than or equal to a second threshold.

Specifically, values of the first threshold and the second threshold may be set according to actual requirements. This is not limited by the present application.

In an embodiment, the second information is implemented in at least one of the following forms: at least one timestamp; at least one of a period or a start time; or at least one of a time interval or a time length.

The timestamp indicates a time at which the event occurs. Specifically, the timestamp may be reported according to the start or the end of a DL/UL slot, a subframe, or a frame and may be indicated by at least one of a hyper system frame number (H-SFN), a system frame number (SFN), a subframe number, or a slot number. Alternatively, the timestamp may be reported using an absolute time.

Periodic timing indicates when the event occurs at the first communication node. Specifically, the start time may be indicated by a start offset or a timestamp; and the start offset may be counted from the start of repetition transmission or from the end of reporting signaling.

The event does not occur within the specified time interval or the specified time length. If only one time interval or time length is reported, periodic occurrence of the event may be considered; and if more than one time interval or time length is indicated, the event may occur sequentially according to the reported time interval.

Based on the second information, the first communication node and the second communication node may reach a consensus on when the event that makes at least one of the inter-slot phase continuity or the inter-slot power consistency fail to be maintained and disrupts the DMRS bundling occurs.

In an embodiment, if the second communication node receives the second information sent by the first communication node, then the step of determining the length of the TDW for the DMRS bundling in step S230 may include determining the length of the TDW according to at least one of the first information or the second information.

In an embodiment, the method of "receiving the second information sent by the first communication node" in step S240 may include receiving the second information sent by the first communication node through any one of a transport block (TB), a physical uplink control channel (PUCCH), a physical uplink shared channel (PUSCH), or a medium access control (MAC) control element (MAC CE); or receiving the second information sent by the first communication node through radio resource control (RRC) signaling.

In an embodiment, the occasion of TA pre-compensation update may also be configured by the second communication node for the first communication node.

The following provides several examples to illustrate the time-domain window determination method of the present application. In the following examples, the first communication node is a UE and the second communication node is a base station by way of example.

### Example one

In example one, the UE sends first information to the base station (the first information includes capability information associated with the maximum duration for DMRS bundling supported by the first communication node in an NTN, where this capability information is determined according to all potential factors that may affect the DMRS bundling in the NTN). The base station sends the length of the TDW to the UE. The length of the TDW may be determined by the base station according to the first information. The UE may determine the nominal TDW according to the length of the TDW. Alternatively, the UE may determine the nominal TDW according to at least one of the first information or the duration of uplink repetition transmission. The UE may determine the actual TDW according to the nominal TDW and an event that makes at least one of the inter-slot phase continuity or the inter-slot power consistency fail to be maintained.

### Example two

In example two, the UE sends first information to the base station (the first information includes capability information associated with the maximum duration for DMRS bundling supported by the first communication node in a terrestrial network (TN) and capability information associated with the maximum duration for DMRS bundling supported by the first communication node when an event that is determined by the first communication node and that makes at least one of the inter-slot phase continuity or the inter-slot power consistency fail to be maintained is not considered). In addition, the UE may send second information to the base station. For the second information, the UE may implement the second information in the form of reporting the time interval between two events that make at least one of the inter-slot phase continuity or the inter-slot power consistency fail to be maintained or may implement the second information in any manner described in the previous embodiments. The base station sends the length of the TDW to the UE. The length of the TDW may be determined by the base station according to the first information. The UE may determine the nominal TDW according to the length of the TDW. Alternatively, the UE may determine the nominal TDW according to at least one of the first information or the duration of uplink repetition transmission. The UE may determine the actual TDW according to the nominal TDW; the event that makes at least one of the inter-slot phase continuity or the inter-slot power consistency fail to be maintained; and the second information.

### Example three

In example three, the UE sends first information to the base station (the first information includes first indication information; and capability information associated with the maximum duration for DMRS bundling supported by the first communication node in a terrestrial network (TN)). In addition, the UE may send second information to the base station. For the second information, the UE may implement the second information in the form of reporting the time interval between two TA pre-compensation updates or may implement the second information in any manner described in the previous embodiments. The base station sends the length of the TDW to the UE. The length of the TDW may be determined by the base station according to the first information. The UE may determine the nominal TDW according to the length of the TDW. Alternatively, the UE may determine the nominal TDW according to at least one of the first information or the duration of uplink repetition transmission. The UE may determine the actual TDW according to the nominal TDW; the event that makes at least one of the inter-slot phase continuity or the inter-slot power consistency fail to be maintained; and the second information.

### Example four

In example four, the UE sends first information to the base station (the first information includes capability information associated with the maximum duration for DMRS bundling supported by the first communication node when at least one of TA pre-compensation update or antenna switching is not considered). In addition, the UE may send second information to the base station. For the second information, the UE may implement the second information in the form of reporting the time interval between two TA pre-compensation updates or may implement the second information in any manner described in the previous embodiments. The base station sends the length of the TDW to the UE. The length of the TDW may be determined by the base station according to the first information. The UE may determine the nominal TDW according to the length of the TDW. Alternatively, the UE may determine the nominal TDW according to at least one of the first information or the duration of uplink repetition transmission. The UE may determine the actual TDW according to the nominal TDW; the event that makes at least one of the inter-slot phase continuity or the inter-slot power consistency fail to be maintained; and the second information.

It is also to be noted that the preceding embodiments and examples of the present application may also be applied to a downlink. In this case, the nominal TDW may be configured at the base station, and the actual TDW in the downlink may be determined using the event that makes at least one of the inter-slot phase continuity or the inter-slot power consistency fail to be maintained.

FIG. 6 is a diagram illustrating the structure of a time-domain window determination apparatus according to an embodiment. The apparatus may be configured in a first communication node. As shown in FIG. 6, the apparatus includes a communication module 10 and a determination module 11.

The communication module 10 is configured to send first information to a second communication node.

The determination module 11 is configured to determine a time-domain window (TDW) for demodulation reference signal (DMRS) bundling.

The time-domain window determination apparatus of this embodiment can implement the time-domain window determination method of any previous embodiment. The implementation principles and technical effects of the time-domain window determination apparatus of this embodiment are similar to those of any previous embodiment and thus are not repeated here.

In an embodiment, the TDW includes at least one of a nominal TDW or an actual TDW.

In an embodiment, the determination module 11 is configured to determine the nominal TDW according to at least one of the first information or the duration of uplink repetition transmission; or determine the nominal TDW according to the length of the TDW sent by the second communication node.

In an embodiment, the first information includes at least one of the following:
capability information associated with the maximum duration for DMRS bundling supported by the first communication node in a non-terrestrial network (NTN);
first indication information for indicating whether timing advance (TA) pre-compensation update is allowed within the actual TDW;
second indication information for indicating whether the first communication node is capable of maintaining at least one of inter-slot phase continuity or inter-slot power consistency during TA pre-compensation update;
capability information associated with the maximum duration for DMRS bundling supported by the first communication node in a terrestrial network (TN);
capability information associated with the maximum duration for DMRS bundling supported by the first communication node when at least one of TA pre-compensation update or antenna switching is not considered; or
capability information associated with the maximum duration for DMRS bundling supported by the first communication node when an event that is determined by the first communication node and that makes at least one of the inter-slot phase continuity or the inter-slot power consistency fail to be maintained is not considered.

In an embodiment, the maximum duration for the DMRS bundling supported by the first communication node in the NTN is determined according to at least one of the following:
phase pre-compensation capability information;
the occasion of TA pre-compensation update;
the period of TA pre-compensation update;
the occasion of antenna switching; or
the period of antenna switching.

In an embodiment, the communication module 10 is also configured to send second information to the second communication node. The second information indicates the occasion of occurrence of an event that makes at least one of inter-slot phase continuity or inter-slot power consistency fail to be maintained.

In an embodiment, the event that makes at least one of the inter-slot phase continuity or the inter-slot power consistency fail to be maintained includes at least one of the following:
TA pre-compensation update;
antenna switching;
inter-slot phase discontinuity or an inter-slot phase difference greater than or equal to a first threshold; or
inter-slot power inconsistency or a power difference greater than or equal to a second threshold.

In an embodiment, the length of the TDW is determined by the second communication node according to at least one of the first information or the second information; or the actual TDW is determined by the first communication node according to the second information and the nominal TDW.

In an embodiment, the second information is implemented in at least one of the following forms: at least one timestamp; at least one of a period or a start time; or at least one of a time interval or a time length.

In an embodiment, the communication module 10 is also configured to perform at least one of the following: before the DMRS bundling, sending the second information to the second communication node through any one of a transport block (TB), a physical uplink control channel (PUCCH), a physical uplink shared channel (PUSCH), or a medium access control (MAC) control element (MAC CE); or sending the second information to the second communication node through radio resource control (RRC) signaling.

FIG. 7 is a diagram illustrating the structure of a time-domain window determination apparatus according to an embodiment. The apparatus may be configured in a second communication node. As shown in FIG. 7, the apparatus includes a communication module 20 and a determination module 21.

The communication module 20 is configured to receive first information sent by a first communication node.

The determination module 21 is configured to determine the length of a time-domain window (TDW) for demodulation reference signal (DMRS) bundling.

The communication module 20 is also configured to send the length of the TDW to the first communication node.

The time-domain window determination apparatus of this embodiment can implement the time-domain window determination method of any previous embodiment. The implementation principles and technical effects of the time-domain window determination apparatus of this embodiment are similar to those of any previous embodiment and thus are not repeated here.

In an embodiment, the first information includes at least one of the following:
capability information associated with the maximum duration for DMRS bundling supported by the first communication node in a non-terrestrial network (NTN);
first indication information for indicating whether timing advance (TA) pre-compensation update is allowed within the actual TDW;
second indication information for indicating whether the first communication node is capable of maintaining at least one of inter-slot phase continuity or inter-slot power consistency during TA pre-compensation update;
capability information associated with the maximum duration for DMRS bundling supported by the first communication node in a terrestrial network (TN);
capability information associated with the maximum duration for DMRS bundling supported by the first communication node when at least one of TA pre-compensation update or antenna switching is not considered; or
capability information associated with the maximum duration for DMRS bundling supported by the first communication node when an event that is determined by the first communication node and that makes at least one of the inter-slot phase continuity or the inter-slot power consistency fail to be maintained is not considered.

In an embodiment, the maximum duration for the DMRS bundling supported by the first communication node in the NTN is determined according to at least one of the following:
phase pre-compensation capability information;
the occasion of TA pre-compensation update;
the period of TA pre-compensation update;
the occasion of antenna switching; or
the period of antenna switching.

In an embodiment, the communication module 20 is also configured to receive second information sent by the first communication node. The second information indicates the occasion of occurrence of an event that makes at least one of inter-slot phase continuity or inter-slot power consistency fail to be maintained.

In an embodiment, the event that makes at least one of the inter-slot phase continuity or the inter-slot power consistency fail to be maintained includes at least one of the following:
TA pre-compensation update;
antenna switching;
inter-slot phase discontinuity or an inter-slot phase difference greater than or equal to a first threshold; or
inter-slot power inconsistency or a power difference greater than or equal to a second threshold.

In an embodiment, the determination module 21 is configured to determine the length of the TDW according to at least one of the first information or the second information.

In an embodiment, the second information is implemented in at least one of the following forms:
at least one timestamp;
at least one of a period or a start time; or
at least one of a time interval or a time length.

In an embodiment, the communication module 20 is also configured to perform at least one of the following: receiving the second information sent by the first communication node through any one of a transport block (TB), a physical uplink control channel (PUCCH), a physical uplink shared channel (PUSCH), or a medium access control (MAC) control element (MAC CE); or receiving the second information sent by the first communication node through radio resource control (RRC) signaling.

Embodiments of the present application also provide a communication node. The communication node includes a processor configured to perform the method provided in any embodiment of the present application when executing a computer program. Specifically, the communication node may be a first communication node or a second communication node. By way of example, the first communication node may be the terminal device (for example, UE) of any embodiment of the present application. This is not limited by the present application. The second communication node may be an access network device (for example, base station) of any embodiment of the present application. This is not limited by the present application.

For example, the following embodiments provide a structural diagram of a base station as the communication node and a structural diagram of a UE as the communication node.

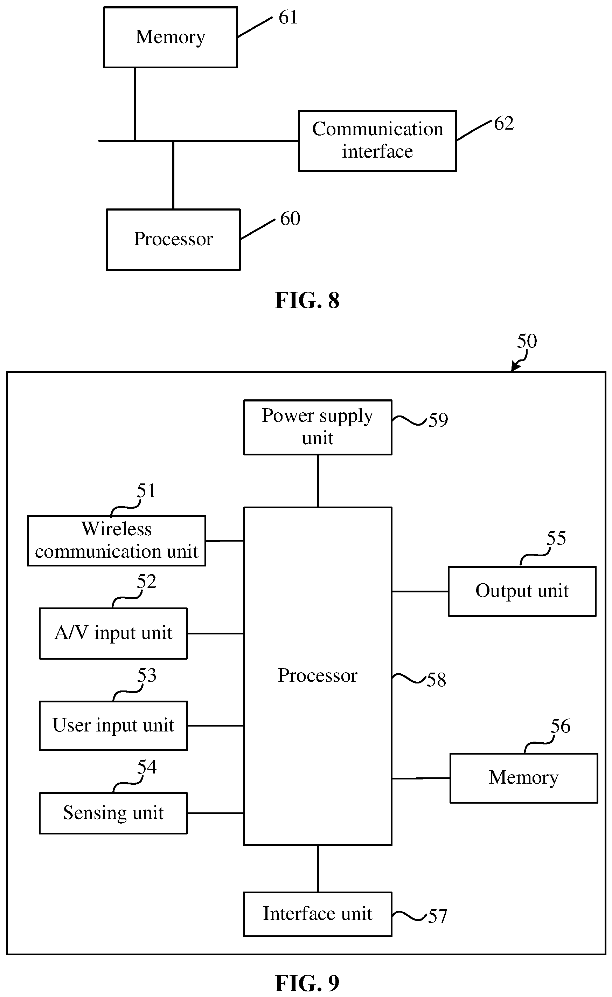

FIG. 8 is a structural diagram of the base station according to an embodiment. As shown in FIG. 8, the base station includes a processor 60, a memory 61, and a communication interface 62. One or more processors 60 may be provided in the base station, and one processor 60 is used as an example in FIG. 8. The processor 60, the memory 61, and the communication interface 62 that are in the base station may be connected through a bus or in other manners. In FIG. 8, the connection through a bus is used as an example. The bus represents one or more of several types of bus structures, including a memory bus or a memory controller, a peripheral bus, an Accelerated Graphics Port, a processor, and a local bus using any bus structure among multiple bus structures.

As a computer-readable storage medium, the memory 61 may be configured to store software programs, computer-executable programs, and modules, such as program instructions/modules corresponding to the method in an embodiment of the present application. The processor 60 executes software programs, instructions, and modules stored in the memory 61 to perform at least one function application and data processing of the base station, that is, to perform the preceding method.

The memory 61 may include a program storage region and a data storage region. The program storage region may store an operating system and an application program required by at least one function. The data storage region may store data created depending on the use of a terminal. In addition, the memory 61 may include a high-speed random-access memory and may also include a nonvolatile memory such as at least one disk memory, a flash memory, or another nonvolatile solid-state memory. In some examples, the memory 61 may be a memory remote from the processor 60 and connectable to the base station by a network. Examples of the preceding network include, but are not limited to, the Internet, an intranet, a network, a mobile communication network, and a combination thereof.

The communication interface 62 may be configured to receive and send data.

FIG. 9 is a diagram illustrating the structure of a UE according to an embodiment. The UE may be implemented in multiple forms. The UE in the present application includes, but is not limited to, a mobile terminal device and a fixed terminal device. The mobile terminal device may be, for example, a mobile phone, a smart phone, a notebook computer, a digital broadcast receiver, a personal digital assistant (PDA), a portable device (PAD), a portable media player (PMP), a navigation apparatus, a vehicle-mounted terminal device, a vehicle-mounted display terminal, and a vehicle-mounted electronic rearview mirror. The fixed terminal device may be, for example, a digital television (TV) and a desktop computer.

As shown in FIG. 9, the UE 50 may include a wireless communication unit 51, an audio/video (A/V) input unit 52, a user input unit 53, a sensing unit 54, an output unit 55, a memory 56, an interface unit 57, a processor 58, and a power supply unit 59. FIG. 9 shows the UE including multiple components. However, it is to be understood that not all the shown components are required to be implemented. More or fewer components may be implemented instead.

In this embodiment, the wireless communication unit 51 allows wireless communication between the UE 50 and a base station or a network. The A/V input unit 52 is configured to receive audio/video signals. The user input unit 53 may generate key input data according to commands input by a user to control various operations of the UE 50. The sensing unit 54 detects the current state of the UE 50, the position of the UE 50, the presence or absence of the user's touch input into the UE 50, the orientation of the UE 50, the acceleration or deceleration of the UE 50, the direction of the acceleration or deceleration and the like and generates commands or signals for controlling the operations of the UE 50. The interface unit 57 serves as an interface through which at least one external apparatus can be connected to the UE 50. The output unit 55 is configured to provide output signals in a visual, audio, and/or tactile manner. The memory 56 may store software programs and the like for processing and control operations performed by the processor 58 or may temporarily store data that has been output or is to be output. The memory 56 may include at least one type of storage medium. Moreover, the UE 50 may cooperate with a network storage apparatus that implements the storage function of the memory 56 through a network connection. The processor 58 is generally configured to control the overall operation of the UE 50. Under the control of the processor 58, the power supply unit 59 receives external power or internal power and provides appropriate power required for operating various elements and components.

The processor 58 executes programs stored in the memory 56 to perform at least one function application and data processing, for example, to perform the method of an embodiment of the present application.

An embodiment of the present application further provides a computer-readable storage medium. The computer-readable storage medium stores a computer program that, when executed by a processor, causes the processor to perform the method provided in any embodiment of the present application.

A computer storage medium according to an embodiment of the present application may be one computer-readable medium or any combination of multiple computer-readable media. The computer-readable medium may be a computer-readable signal medium or a computer-readable storage medium. For example, the computer-readable storage medium may be, but is not limited to, an electrical, magnetic, optical, electromagnetic, infrared, or semiconductor system, apparatus, or device or any combination thereof. The computer-readable storage medium includes (a non-exhaustive list): an electrical connection having one or more wires, a portable computer disk, a hard disk, a random-access memory (RAM), a read-only memory (ROM), an erasable programmable read-only memory (EPROM), a flash memory, an optical fiber, a portable compact disc read-only memory (CD-ROM), an optical memory device, a magnetic memory device, or any appropriate combination thereof. In the present application, the computer-readable storage medium may be any tangible medium including or storing a program. The program may be used by or used in conjunction with an instruction execution system, apparatus, or device.

The computer-readable signal medium may include a data signal propagated in a baseband or as part of a carrier. The data signal carries computer-readable program codes. The data signal propagated in this manner may be in multiple forms and includes, but is not limited to, an electromagnetic signal, an optical signal, or any suitable combination thereof. The computer-readable signal medium may be any computer-readable medium other than the computer-readable storage medium. The computer-readable medium may send, propagate, or transmit a program used by or used in conjunction with an instruction execution system, apparatus, or device.

Program codes included in the computer-readable medium may be transmitted by using any appropriate medium including, but not limited to, a wireless medium, a wire, an optical cable, a radio frequency (RF), or any appropriate combination thereof.

Computer program codes for performing operations of the present disclosure may be written in one programming language or a combination of multiple programming languages. The programming languages include object-oriented programming languages (such as Java, Smalltalk, C++, Ruby, and Go) and conventional procedural programming languages (such as "C" and similar programming languages). Program codes may be executed entirely on a user computer, executed partly on a user computer, executed as a standalone software package, executed partly on a user computer and partly on a remote computer, or executed entirely on a remote computer or a server. In the case where the remote computer is involved, the remote computer may be connected to the user computer via any type of network (including a local area network (LAN) or a wide area network (WAN)) or may be connected to an external computer (for example, via the Internet provided by an Internet service provider).

It is to be understood by those skilled in the art that the term "user equipment" encompasses any appropriate type of wireless user device, such as a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

The embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented by using any suitable data storage technology, such as, but not limited to, a read-only memory (ROM), a random-access memory (RAM), and an optical memory apparatus and system (a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

## Claims

1. A time-domain window determination method, applied to a first communication node, comprising:
sending first information to a second communication node; and
determining a time-domain window, TDW, for demodulation reference signal, DMRS, bundling.

2. The method of claim 1, wherein the TDW comprises at least one of a nominal TDW or an actual TDW.

3. The method of claim 2, wherein the TDW comprises the nominal TDW, and determining the nominal TDW for the DMRS bundling comprises:
determining the nominal TDW according to at least one of the first information or a duration of uplink repetition transmission; or
determining the nominal TDW according to a length of the TDW sent by the second communication node.

4. The method of claim 2, wherein the first information comprises at least one of the following:
capability information associated with a maximum duration for DMRS bundling supported by the first communication node in a non-terrestrial network, NTN;
first indication information for indicating whether a timing advance, TA, pre-compensation update is allowed within the actual TDW;
second indication information for indicating whether the first communication node is capable of maintaining at least one of inter-slot phase continuity or inter-slot power consistency during the TA pre-compensation update;
capability information associated with a maximum duration for DMRS bundling supported by the first communication node in a terrestrial network, TN;
capability information associated with a maximum duration for DMRS bundling supported by the first communication node when at least one of the TA pre-compensation update or antenna switching is not considered; or
capability information associated with a maximum duration for DMRS bundling supported by the first communication node when an event that is determined by the first communication node and that makes at least one of the inter-slot phase continuity or the inter-slot power consistency fail to be maintained is not considered.

5. The method of claim 4, wherein the maximum duration for the DMRS bundling supported by the first communication node in the NTN is determined according to at least one of the following:
phase pre-compensation capability information;
an occasion of the TA pre-compensation update;
a period of the TA pre-compensation update;
an occasion of the antenna switching; or
a period of the antenna switching.

6. The method of claim 2, further comprising:
sending second information to the second communication node, wherein the second information indicates an occasion of occurrence of an event that makes at least one of inter-slot phase continuity or inter-slot power consistency fail to be maintained.

7. The method of claim 6, wherein the event that makes at least one of the inter-slot phase continuity or the inter-slot power consistency fail to be maintained comprises at least one of the following:
TA pre-compensation update;
antenna switching;
inter-slot phase discontinuity or an inter-slot phase difference greater than or equal to a first threshold; or
inter-slot power inconsistency or a power difference greater than or equal to a second threshold.

8. The method of claim 6, wherein
a length of the TDW is determined by the second communication node according to at least one of the first information or the second information; or
the actual TDW is determined by the first communication node according to the second information and the nominal TDW.

9. The method of claim 6, wherein the second information is implemented in at least one of the following forms:
at least one timestamp;
at least one of a period or a start time; or
at least one of a time interval or a time length.

10. The method of claim 6, wherein sending the second information to the second communication node comprises at least one of the following:
before the DMRS bundling, sending the second information to the second communication node through any one of a transport block, TB, a physical uplink control channel, PUCCH, a physical uplink shared channel, PUSCH, or a medium access control, MAC control element, MAC CE; or
sending the second information to the second communication node through radio resource control, RRC, signaling.

11. A time-domain window determination method, applied to a second communication node, comprising:
receiving first information sent by a first communication node;
determining a length of a time-domain window, TDW, for demodulation reference signal, DMRS, bundling; and
sending the length of the TDW to the first communication node.

12. The method of claim 11, wherein the TDW comprises at least one of a nominal TDW or an actual TDW, and the first information comprises at least one of the following:
capability information associated with a maximum duration for DMRS bundling supported by the first communication node in a non-terrestrial network, NTN;
first indication information for indicating whether timing advance, TA, pre-compensation update is allowed within the actual TDW;
second indication information for indicating whether the first communication node is capable of maintaining at least one of inter-slot phase continuity or inter-slot power consistency during the TA pre-compensation update;
capability information associated with a maximum duration for DMRS bundling supported by the first communication node in a terrestrial network, TN;
capability information associated with a maximum duration for DMRS bundling supported by the first communication node when at least one of the TA pre-compensation update or antenna switching is not considered; or
capability information associated with a maximum duration for DMRS bundling supported by the first communication node when an event that is determined by the first communication node and that makes at least one of the inter-slot phase continuity or the inter-slot power consistency fail to be maintained is not considered.

13. The method of claim 12, wherein the maximum duration for the DMRS bundling supported by the first communication node in the NTN is determined according to at least one of the following:
phase pre-compensation capability information;
an occasion of the TA pre-compensation update;
a period of the TA pre-compensation update;
an occasion of the antenna switching; or
a period of the antenna switching.

14. The method of claim 11, further comprising:
receiving second information sent by the first communication node, wherein the second information indicates an occasion of occurrence of an event that makes at least one of inter-slot phase continuity or inter-slot power consistency fail to be maintained.

15. The method of claim 14, wherein the event that makes at least one of the inter-slot phase continuity or the inter-slot power consistency fail to be maintained comprises at least one of the following:
TA pre-compensation update;
antenna switching;
inter-slot phase discontinuity or an inter-slot phase difference greater than or equal to a first threshold; or
inter-slot power inconsistency or a power difference greater than or equal to a second threshold.

16. The method of claim 14, wherein determining the length of the TDW for the DMRS bundling comprises:
determining the length of the TDW according to at least one of the first information or the second information.

17. The method of claim 14, wherein the second information is implemented in at least one of the following forms:
at least one timestamp;
at least one of a period or a start time; or
at least one of a time interval or a time length.

18. The method of claim 14, wherein receiving the second information sent by the first communication node comprises at least one of the following:
receiving the second information sent by the first communication node through any one of a transport block, TB, a physical uplink control channel, PUCCH, a physical uplink shared channel, PUSCH, or a medium access control, MAC, control element, MAC CE; or
receiving the second information sent by the first communication node through radio resource control, RRC, signaling.

19. A communication node, comprising a processor, wherein the processor is configured to perform the time-domain window determination method of any one of claims 1 to 10 or any one of claims 11 to 18 when executing a computer program.

20. A computer-readable storage medium storing a computer program which, when executed by a processor, causes the processor to perform the time-domain window determination method of any one of claims 1 to 10 or any one of claims 11 to 18.
